# EUROPÄISCHE PATENTSCHRIFT

(11) **EP 1 104 514 B1**
(45) Veröffentlichungstag und Bekanntmachung des Hinweises auf die Patenterteilung: **22.10.2003**
(21) Anmeldenummer: 99938252.6
(22) Anmeldetag: 15.07.1999
(51) Int. Cl.: F16F 9/46, F16K 31/06

(54) **HYDRAULISCHER SCHWINGUNGSDÄMPFER FÜR KRAFTFAHRZEUGE**
HYDRAULIC VIBRATION DAMPER FOR MOTOR VEHICLES
AMORTISSEUR HYDRAULIQUE DE VIBRATIONS POUR VEHICULES A MOTEUR

(30) Priorität: 11.08.1998 DE 19836286
(43) Veröffentlichungstag der Anmeldung: 06.06.2001
(73) Patentinhaber: ThyssenKrupp Bilstein GmbH, 58256 Ennepetal (DE)
(72) Erfinder: HUANG, Zhen Dr., D-97076 Würzburg (DE)
(86) Internationale Anmeldenummer: EP9905007
(87) Internationale Veröffentlichungsnummer: WO00009912

(56) Entgegenhaltungen:
- EP-A- 0 829 383
- DE-C- 4 020 045
- US-A- 4 723 640
- US-A- 4 974 707

## Beschreibung

Die Erfindung betrifft einen hydraulischen Schwingungsdämpfer-für Kraftfahrzeuge mit einem Dämpfungskolben, der schaltbare Bypassöffnungen aufweist, nach dem Oberbegriff des Anspruchs 1.

Um die Dämpfungseigenschaften von hydraulischen Schwingungsdämpfern für Kraftfahrzeuge den äußeren Fahrbedingungen anpassen zu können, ist es bekannt, die Schwingungsdämpfer während der Fahrt zu verstellen. Eine Lösung zum Verstellen der Schwingungseigenschaften der Schwingungsdämpfer besteht darin, daß der Dämpfungskolben zusätzlich zu seinen Drosselventilkörpern, die hydraulisch gesteuert werden, mit zusätzlichen schaltbaren Bypässen ausgebildet ist.

Die DE 35 18 327 C2, ebenso wie die DE 40 20 045 C1, zeigen derartige hydraulische Schwingungsdämpfer. Nachteilig bei diesen Schwingungsdämpfern ergibt sich, daß bei der Freischaltung eines geringen Bypassquerschnittes und hohen Druckunterschieden zwischen den beiden Arbeitsräumen des Schwingungsdämpfers sehr hohe Fließgeschwindigkeiten für die Dämpfungsflüssigkeit speziell an den Steuerkanten des Ventilschiebers auftreten. Das führt nachteilig zu hohen hydraulischen Kräften, die im Extremfall dazu führen können, daß eine ungenaue Schaltung durch die Ventilschieber erfolgt. Von daher wird häufig davon abgegangen, eine Serie von Bypassöffnungen durch ein einzelnes Magnetventil zu steuern oder den zu öffnenden Bypassquerschnitt kontinuierlich durch ein Magnetventil zu regeln. Alternativ werden Drehregelungen oder eine Vielzahl von Magnetventilen eingesetzt, was jedoch in den meisten Fällen Bauraumprobleme verursacht.

Der Erfindung liegt die Aufgabe zugrunde, einen hydraulischen Schwingungsdämpfer derartig weiterzubilden, daß bei der Schaltung oder Steuerung des Durchflusses von Bypasskanälen die Störeinflüsse, hervorgerufen durch die sich ständig verändernden hydraulischen Kräfte aus der Dämpfungsmittelströmung, reduziert werden.

Diese Aufgabe wird erfindungsgemäß mit den Merkmalen des Anspruchs 1 gelöst. Vorteilhafte Aus- und Weiterbildungen sind in den Ansprüchen 2 bis 5 beschrieben.

Die mit der Erfindung erzielten Vorteile bestehen insbesondere darin, daß die Mittel zur Schaltung und Steuerung der Bypassquerschnitte einfach und mit geringem Bauvolumen ausgebildet sind und daß eine bezüglich der hydraulischen Einflüsse störungsunanfällige Steuerung bzw. Schaltung gefunden wurde.

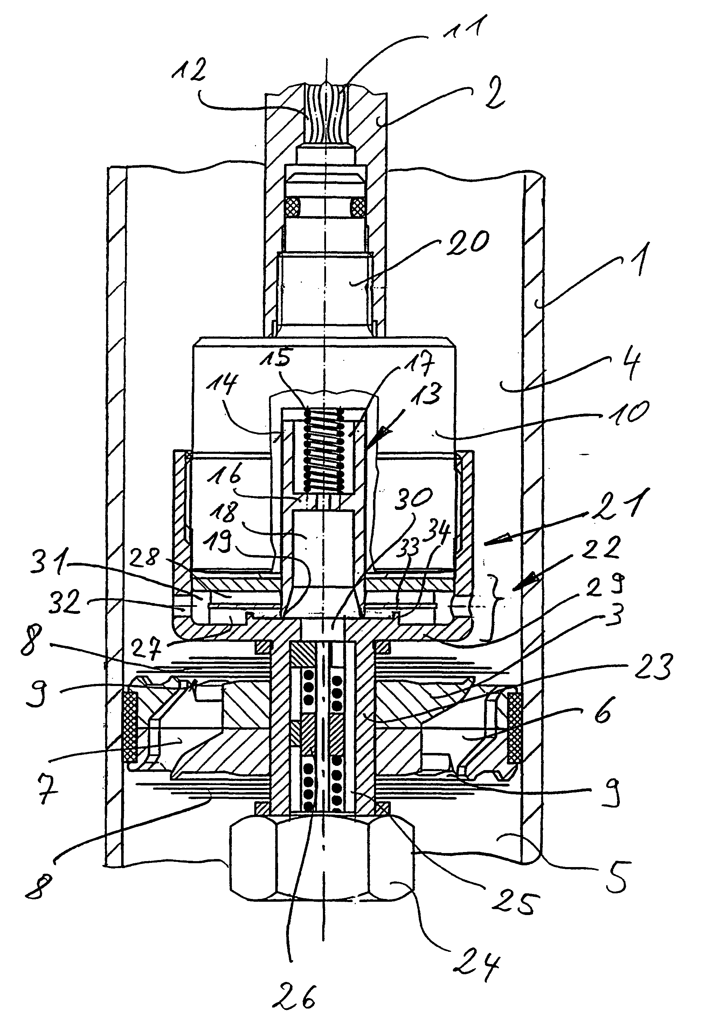

Ein Ausführungsbeispiel der Erfindung ist in der Zeichnung dargestellt und wird im folgenden näher beschrieben. Die einzige Figur zeigt einen Querschnitt durch einen hydraulischen Stoßdämpfer im Bereich des Dämpfungskolbens.

In einen, eine Dämpfungsflüssigkeit enthaltenden Zylinder 1 taucht eine Kolbenstange 2 oszillierend ein. Am eintauchenden Ende dieser Kolbenstange 2 ist ein Dämpfungskolben 3 angeordnet, der den Zylinderraum in zwei Arbeitsräume 4, 5 unterteilt. Der Dämpfungskolben 3 ist mit Durchlässen 6, 7 versehen, die eine Durchströmung der Dämpfungsflüssigkeit alternativ in Zug- oder Druckbewegung des Dämpfungskolbens 3 zulassen. Mehrere zu einem Federscheibenpaket geschichtete Federscheiben 8 wirken zum einem als Rückschlagventil und zum anderen als Drosselventil, das dazu dient, je nach Druckdifferenz zwischen den Arbeitsräumen 4 und 5 die Durchlaßöffnungen 9 mehr oder minder weit freizugeben. Mittels des vorbeschriebenen Dämpfungskolbens 3 mit den zugehörigen Ventilsystemen wird am Stoßdämpfer somit ein festes Dämpfungsverhalten eingestellt.

Für verschiedene Anwendungen ist es bekannt, diese feste Dämpfungseinstellung situationsabhängig zu verändern. Im Ausführungsbeispiel dient dazu ein Bypasskanalsystem, über das die vom Dämpfungskolben 3 vorgegebene Dämpfungskennung des Stoßdämpfers in zwei Stufen verstellt werden kann. Als Verstellantrieb dient ein Magnetventil mit einer Ringspule, die in einem Spulenkörper 10 aufgenommen wird. Dieser Spulenkörper 10 wird von außen mit Strom beaufschlagt. Die elektrischen Leitungen 11 werden durch eine zentrale Bohrung 12 der Kolbenstange 3 geführt. Ein zylindrischer Ventilschieber 13, der in einer zentralen Bohrung 14 des Spulenkörpers 10 axial beweglich geführt wird, dient zum Öffnen oder Schließen der Bypasskanäle. Gegen die Kraft einer auf Druck belastbaren Wendelfeder 15 kann der Ventilschieber 13 je nach Strombeaufschlagung der im Spulenkörper 10 angeordneten Ringspule in zwei verschiedene Öffnungsstellungen gebracht werden. Der Ventilschieber 13 ist hohlzylindrisch mit einer mittleren Trennwand 16 ausgebildet, die den Hohlzylinder in zwei entgegengesetzte Topfräume 17, 18 aufteilt. Im oberen Topfraum 17 ist die Wendelfeder 15 angeordnet. Der untere Topfraum 18 ist am öffnungsseitigen Rand mit einer Dichtschneide 19 ausgebildet.

Der Spulenkörper 10 wird über einen endseitigen, mit einem Außengewinde versehenen Zapfen 20 an der Kolbenstange 2 befestigt, die an ihrem Ende ein entsprechendes Innengewinde aufweist. Über ein Adapterstück 21, das über ein Gewinde am Spulenkörper 10 fixiert ist und sich unter den Spulenkörper 10 erstreckt, wird der Dämpfungskolben 3 angebunden. Das Adapterstück 21 ist in seinem Zentralbereich 22 als Ventilkörper aufgebaut und erstreckt sich mit einem Hohlzapfen 23 nach unten. Der Hohlzapfen 23 trägt an seinem Außenumfang den Dämpfungskolben 3, der über eine Mutter 24 auf dem Hohlzapfen 23 verspannt wird. Innerhalb des Hohlzapfens 23 ist ein An- und Abströmdurchlaß 25 für die Bypasskanäle angeordnet. Innerhalb des An- und Abströmdurchlasses 25 liegen Rückschlagventile 26, die dazu dienen, die Bypasskennung für die Druck- oder Zugstufe des Schwingungsdämpfers unterschiedlich zu gestalten.

Zwei sich radial strahlenförmig erstreckende Systeme von Bypasskanälen 27, 28 sind im Zentralbereich 22 des Adapterstücks 21 übereinanderliegend angeordnet. Sie enden zum Zentrum hin in einer Bohrung, die durch den eintauchenden Ventilschieber 13 verschlossen werden können. Die untere Wand 29 des untenliegenden Bypasskanals 27 erstreckt sich zentral weiter nach innen und dient als Gegendichtfläche für die Dichtschneide 19 des Ventilschiebers 13. Diese untere Wand 29 weist im Zentrum eine Bohrung 30 auf, die eine hydraulische Verbindung zum An- und Abströmdurchlaß 25 bildet.

Beide übereinanderliegenden Systeme von Bypasskanälen 27, 28 enden radial außen in einem Ringkanal 31, der wiederum über radial angeordnete Bohrungen 32 durch die Außenwand des Adapterstücks 21 hydraulisch mit dem Arbeitsraum 4 verbunden sind.

Die elektrisch angeregte zweistufige Verstellung des Ventilschiebers 13 ermöglicht ein nacheinander erfolgendes Öffnen oder Schließen der übereinanderliegenden Systeme von Bypasskanälen 27, 28. Aus Sicherheitsgründen erfolgt ein Schließen beider Systeme von Bypasskanälen 27, 28 bei Ausfall der Elektrik durch die Wendelfeder 15. Dadurch wird die Kennung des Schwingungsdämpfers auf hart eingestellt.

Das erst zu öffnende System von Bypasskanälen 27 ist in einer gewissen Entfernung zum Ventilschieber 13 mit einer Verengung 33 ausgebildet. Diese Verengung 33 des Systems der Bypasskanäle 27 ist im Ausführungsbeispiel als Ringwulst 34 ausgebildet. Andere Verengungsmöglichkeiten sind denkbar. Die Verengung kann auch durch einen einlegbaren Ring aus Metall oder Kunststoff hergestellt werden. Es ist auch vorstellbar, daß die Verengung mittels elastischer oder federnder Mittel gebildet wird, so daß sie je nach Druckdifferenz zwischen den Arbeitsräumen 4, 5 einen unterschiedlichen Querschnitt freigibt.

Die Entfernung der Verengung 33 von dem Ventilschieber 13 ist so gewählt, daß sich die durch die hohe Strömgeschwindigkeit der Dämpfungsflüssigkeit erzeugten hydraulischen Einflüsse kaum noch auf die Schließfunktion des Ventilschiebers 13 auswirken. Dadurch ist ein leichteres und sicheres Halten des Ventilschiebers 13 in der ersten Öffnungsstellung, in der der Ventilschieber lediglich über die voreingestellte elektrische Haltekraft gehalten wird, sichergestellt. Die in der Zeichnung dargestellte vollständige Schließstellung des Ventilschiebers 13 bzw. die vollständige Öffnungsstellung, bei der beide Systeme von Bypasskanälen 27, 28 geöffnet sind, sind von entsprechenden hydraulisch induzierten Kräften relativ unabhängig.

### Bezugszeichenliste

- 1.: Zylinder
- 2.: Kolbenstange
- 3.: Dämpfungskolben
- 4.: Arbeitsraum
- 5.: Arbeitsraum
- 6.: Durchlaß
- 7.: Durchlaß
- 8.: Federscheibe
- 9.: Durchlaßöffnung
- 10.: Spulenkörper
- 11.: Leitung
- 12.: Bohrung
- 13.: Ventilschieber
- 14.: zentrale Bohrung
- 15.: Wendelfeder
- 16.: Trennwand
- 17.: Topfraum
- 18.: Topfraum
- 19.: Dichtschneide
- 20.: Zapfen
- 21.: Adapterstück
- 22.: Zentralbereich
- 23.: Hohlzapfen
- 24.: Mutter
- 25.: An- und Abströmdurchlaß
- 26.: Rückschlagventil
- 27.: Bypasskanal
- 28.: Bypasskanal
- 29.: untere Wand
- 30.: Bohrung
- 31.: Ringkanal
- 32.: Bohrung
- 33.: Verengung
- 34.: Ringwulst

## Patentansprüche

1. Hydraulischer Schwingungsdämpfer für Kraftfahrzeuge mit einem, eine Dämpfungsflüssigkeit enthaltenden Zylinder (1) und einer darin eintauchenden, abgedichteten, axial verschiebbar angeordneten Kolbenstange (2), an deren unterem Ende ein Dämpfungskolben (3) befestigt ist, der den Zylinderraum in zwei Arbeitsräume (4, 5) unterteilt, mit veränderbaren Durchlässen versehen ist, die durch Drosselventilkörper gesteuert werden und zusätzlich einem Bypass für die Druck- und Zugstufe aufweist, dessen Bypassquerschnitt durch ein drei- oder mehrstufig arbeitendes Magnetventil verstellt wird, dessen Ringspule einen Ventilschieber (13) mehr oder minder öffnet, wodurch nacheinander zwei oder mehr Bypassöffnungen freigegeben werden, **dadurch gekennzeichnet, daß** wenigstens der erste nach der Schließstellung des Ventilschiebers (13) angesteuerte Bypasskanal (27) eine vom Ventilschieber (13) entfernte Verengung (33) aufweist.

2. Hydraulischer Schwingungsdämpfer nach Anspruch 1, **dadurch gekennzeichnet, daß** der Ventilschieber (13) zylindrisch ausgebildet ist und die Bypasskanäle (27, 28) sich einerseits zentrisch axial und andererseits scheiben- oder strahlenförmig radial erstrecken.

3. Hydraulischer Schwingungsdämpfer nach Anspruch 2, **dadurch gekennzeichnet, daß** mehrere scheiben- oder strahlenförmig ausgebildete Bypasskanäle (27, 28) axial übereinanderliegen und ihre zentralen Bypassöffnungen nacheinander vom Ventilschieber (13) verschlossen oder geöffnet werden.

4. Hydraulischer Schwingungsdämpfer nach einem oder mehreren der Ansprüche 1 bis 3, **dadurch gekennzeichnet, daß** der Ventilschieber (13) topfförmig ausgebildet ist.

5. Hydraulischer Schwingungsdämpfer nach einem oder mehreren der Ansprüche 1 bis 4, **dadurch gekennzeichnet, daß** die Verengung (33) veränderbar ist.

## Claims

1. Hydraulic vibration damper for motor vehicles having a cylinder (1), which contains damping fluid, and a piston rod (2) which is received in said cylinder in a sealing manner and is disposed therein in such a manner so as to be axially displaceable, a damping piston (3) is fixed on the lower end of the piston rod, divides the cylinder chamber into two working chambers (4, 5), is provided with variable passages which are controlled by means of a restrictor valve body, and additionally comprises a bypass for the compression and drawing stages, the bypass cross-section thereof is adjusted by means of a solenoid valve working in three-or-more stages, the toroid of which solenoid valve more or less opens a valve slide (13) wherein two or more bypass apertures are revealed in succession, **characterised in that** at least the bypass duct (27) which is the first to be triggered after closing the valve slide (13) comprises a reduction in width (33) which is remote from the valve slide (13).

2. Hydraulic vibration damper as claimed in Claim 1, **characterised in that** the valve slide (13) is formed in a cylindrical manner and the bypass ducts (27, 28) extend on the one hand in a centrally axial manner and on the other hand in a radial disk- or beam-like manner.

3. Hydraulic vibration damper as claimed in Claim 2, **characterised in that** several bypass ducts (27, 28) are formed in a disk- or beam-like manner and are axially superimposed above each other and their central bypass apertures are opened or closed in sequence by the valve slide (13).

4. Hydraulic vibration damper as claimed in any one or several of Claims I to 3, **characterised in that** the valve slide (13) is formed in a pot-like manner.

5. Hydraulic vibration damper as claimed in any one or several of Claims 1 to 4, **characterised in that** the reduction in width (33) is variable.

## Revendications

1. Amortisseur hydraulique de vibrations pour véhicules automobiles, avec un cylindre (1) qui contient un liquide d'amortissement, et une tige de piston (2) qui s'y enfonce, qui est disposée de manière à pouvoir s'y déplacer axialement de manière étanche, et à l'extrémité de laquelle est fixé un piston d'amortissement (3) qui divise la chambre du cylindre en deux chambres de travail (4, 5), qui est doté de passages variables qui sont commandés par un corps de soupape d'étranglement, et qui présente de plus une dérivation pour l'étage de compression et l'étage de traction, dont la section transversale est ajustée par une soupape magnétique qui travaille en trois étages ou davantage, et dont la bobine annulaire ouvre plus ou moins un coulisseau de soupape (13), ce qui libère successivement deux ou plusieurs ouvertures de dérivation, **caractérisé en ce qu'**au moins le premier canal de dérivation (27) commandé après la position de fermeture du coulisseau de soupape (13), présente un rétrécissement (33) situé à distance du coulisseau de soupape (13).

2. Amortisseur hydraulique de vibrations selon la revendication 1, **caractérisé en ce que** le coulisseau de soupape (13) est configuré en cylindre, et **en ce que** les canaux de dérivation (27, 28) s'étendent d'une part axialement au centre, et d'autre part radialement en forme de disque ou de rayon.

3. Amortisseur hydraulique de vibrations selon la revendication 2, **caractérisé en ce que** plusieurs canaux de dérivation (27, 28) configurés en forme de disques ou de rayons se superposent mutuellement dans le sens axial, leurs ouvertures centrales de dérivation pouvant être fermées ou ouvertes successivement par le coulisseau de soupape (13).

4. Amortisseur hydraulique de vibrations selon l'une ou plusieurs des revendications 1 à 3, **caractérisé en ce que** le coulisseau de soupape (13) est configuré en godet.

5. Amortisseur hydraulique de vibrations selon l'une ou plusieurs des revendications 1 à 4, **caractérisé en ce que** le rétrécissement (33) est variable.
